# FASCICULE DE BREVET EUROPEEN

(11) **EP 0 521 861 B1**
(45) Date de publication et mention de la délivrance du brevet: **07.09.1994**
(21) Numéro de dépôt: 91903614.5
(22) Date de dépôt: 18.01.1991
(51) Int. Cl.: A47J 31/40, A47J 31/36

(54) **DISPOSITIF POUR LA PERCOLATION AUTOMATIQUE ET INSTANTANEE DE LIQUIDES ALIMENTAIRES**
AUTOMATISCHE FILTRIEREINRICHTUNG ZUR HERSTELLUNG VON FLÜSSIGEN NAHRUNGSMITTELN
METHOD FOR THE AUTOMATIC AND INSTANTENEOUS PERCOLATION OF ALIMENTARY LIQUIDS

(30) Priorité: 19.01.1990 FR 9000820
(43) Date de publication de la demande: 13.01.1993
(73) Titulaire: VERSINI, Rolland, F-13480 Calas (FR)
(72) Inventeur: VERSINI, Rolland, F-13480 Calas (FR)
(74) Mandataire: Roman, Michel
(86) Numéro de dépôt international: FR9100030
(87) Numéro de publication internationale: WO9110391

(56) Documents cités:
- EP-A- 0 004 659
- EP-A- 0 299 400
- EP-A- 0 309 780
- FR-A- 1 341 016
- FR-A- 2 347 911
- FR-A- 2 594 671
- LU-A- 84 645

## Description

La présente invention a pour objet un dispositif pour la percolation automatique et instantanée de liquides alimentaires, et notamment de boissons chaudes telles que le café.

L'invention est destinée à permettre la confection, dans des conditions entièrement automatiques et sans intervention humaine autre que l'envoi d'un signal de commande initial, d'une boisson chaude telle qu'un café de type "express", c'est-à-dire délivré et mis à la disposition du consommateur immédiatement au sortir de la phase de percolation.

Les dispositifs réalisés à ce jour, et en particulier celui décrit dans le brevet N^{o} FR 86 02636 du même inventeur, sont le plus souvent basés sur l'utilisation d'un cylindre vertical constituant la chambre d'infusion dans lequel est déversé une certaine quantité de café moulu retenu par une grille constituant le fond dudit cylindre. Un piston se déplaçant verticalement vient compresser la poudre de café, au travers de laquelle de l'eau chaude est alors injectée puis évacuée. L'eau chaude parvient en général dans le cylindre en passant par le piston mobile de compression, ce qui nécessite une tubulure flexible généralement fragile. Le fond du cylindre est mobile et peut remonter dans ce dernier afin de permettre l'extraction de la poudre qui est évacuée à l'aide d'un racloir mobile. L'ensemble est actionné à l'aide de mécanismes en général complexes et coûteux comportant des systèmes d'encliquetage mécaniques et autres, et commandés par des dispositifs électro-mécaniques ou électroniques, associés à une série de microcontacts, dont les défaillances sont fréquentes. La présence du piston mobile au-dessus du cylindre rend l'opération de déversement de la poudre de café dans celui-ci malaisée, en imposant un cheminement compliqué et des moyens de guidage mobiles. Enfin, l'alimentation en eau chaude et l'évacuation du café infusé se fait par un réseau de conduit générateur de pertes calorifiques.

Le dispositif suivant la présente invention supprime ces inconvénients. En effet, il permet de réaliser une machine automatique de percolation extrêmement fiable, d'un entretien particulièrement aisé, d'un excellent rendement thermique et d'un prix de revient compétitif.

Il est constitué par la combinaison d'abord d'un groupe mécanique disposé horizontalement et amovible sans outillage pour faciliter l'entretien, les mouvements des pièces mobiles étant tous provoqués par deux crémaillères à déplacements horizontaux, axiaux et inversés, ensuite, d'une chambre d'infusion dans laquelle le passage de l'eau chaude se fait transversalement à l'axe horizontal du piston de compression sans passer par ce dernier, ni par le fond de la chambre d'infusion, laquelle est prolongée par une chambre de remplissage mobile horizontale recevant le déversement direct de la poudre de café celle-ci étant évacuée par un racloir à mouvement également horizontal mu par un levier rotatif, ensuite, d'une chaudière située immédiatement au-dessous du groupe mécanique et raccordée directement à la chambre d'infusion par des raccords rapides d'injection d'eau et d'évacuation du café infusé, sans tubulure, le café infusé repassant par le corps de ladite chaudière, ensuite d'un système d'entraînement du fond mobile de la chambre d'infusion à encliquetage magnétique, sans pièces mobiles ensuite d'une motopompe d'alimentation en eau à débitmètre amont intégré enfin d'un moteur entraînant le groupe mécanique par un accouplement rapide, et dont l'arrêt et l'inversion de marche sont commandés directement par un capteur de couple électronique contrôlant la pression et supprimant les micro-contacts.

Sur les dessins annexés donnés à titre d'exemple non limitatif d'une des formes de réalisation de l'objet de l'invention :
La figure 1 montre le groupe mécanique vu de dessus, dans sa position de repos.
Les figures 2 et 3 représentent le groupe mécanique dans deux phases successives, respectivement pendant l'infusion du café et pendant l'évacuation de la poudre de café à l'aide du racloir.
La figure 4 est une vue de dessous du groupe mécanique montrant les raccords rapides d'alimentation d'eau et d'évacuation du café infusé, ainsi que l'accouplement rapide du moteur.
La figure 5 est une coupe longitudinale, à une échelle différente, suivant les flèches A-A de la figure 1.
La figure 6 est une coupe transversale, à une échelle différente, suivant les flèches B-B de la figure 1.
La figure 7 est un détail agrandi de la figure 5 montrant le cheminement de l'eau et de la poudre de café.
La figure 8 représente une coupe axiale de la moto-pompe d'alimentation en eau avec débitmètre intégré.
La figure 9 montre une variante du système d'entraînement du groupe mécanique.
La figure 10 est une coupe horizontale du dispositif de dosage de la poudre disposé à la base du moulin à café.

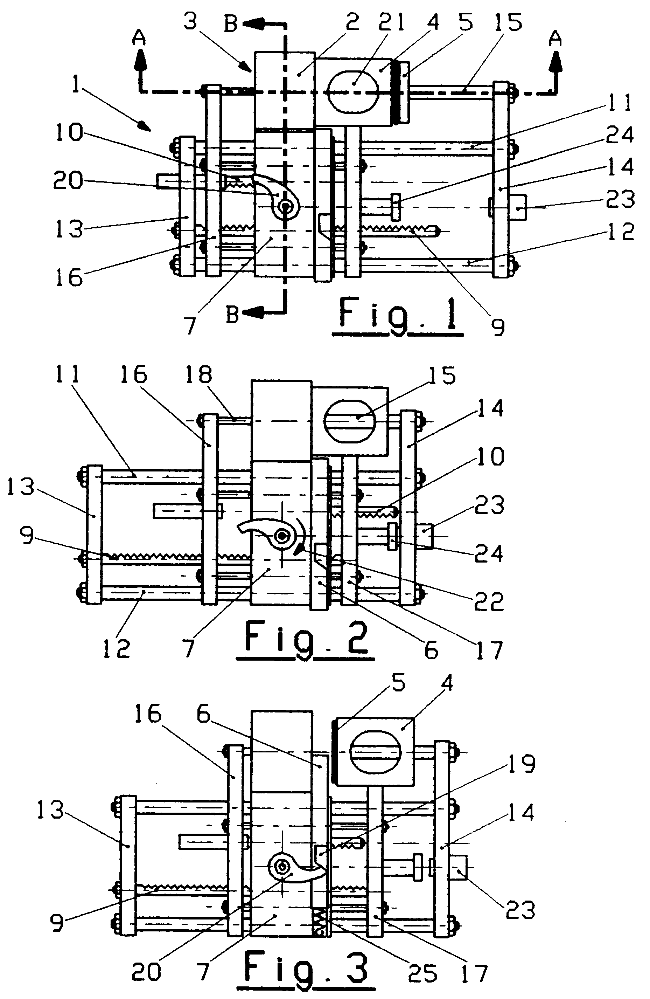

Le dispositif, figure 1 à 5, est constitué d'un groupe mécanique 1 disposé horizontalement juste au-dessus d'une chaudière (non représentée) et d'un moteur d'entraînement de l'ensemble.

Ce groupe est composé de trois éléments principaux :
- un bloc fixe 7 portant la chambre d'infusion 2 et le système d'entraînement,
- un ensemble coulissant dans le bloc fixe grâce à une crémaillère principale 9, solidaire du piston de compression 5, et formé de deux tiges 11, 12, réunies à leurs extrémités par deux traverses externes 13, 14,
- un second ensemble constitué de deux traverses internes 16, 17 coulissant sur les tiges du premier ensemble et rendues solidaires par deux tirants, ce second ensemble étant solidaire, d'une part, du fond mobile 3 de la chambre d'infusion 2, d'autre part, d'une chambre de remplissage 4 prolongeant la chambre d'infusion 2.

Sur le bloc fixe 7 sont montés outre la chambre d'infusion 2, un pignon 8 à axe vertical engrenant avec la crémaillère principale 9 et une crémaillère secondaire 10 parallèles, à mouvements axiaux et horizontaux inversés, et actionnant un racloir 6.

Le bloc fixe 7 comporte deux alésages dans lesquels peuvent coulisser les deux tiges parallèles 11 et 12 horizontales portant à leurs extrémités les deux traverses externes 13 et 14 situées respectivement du côté du fond mobile 3 et du côté du piston de compression 5. La traverse 13 est solidaire d'une extrémité de la crémaillère principale 9 alors que la traverse 14 est solidaire de l'axe 15 du piston de compression 5.

Les deux traverses internes 16 et 17 coulissent sur les tiges 11 et 12 et sont rendues solidaires par deux tirants traversant le bloc fixe 7, la traverse 16, située entre le bloc fixe 7 et la traverse externe 13 étant solidaire d'une tige 18 portant le fond mobile 3, et la traverse 17 située entre le bloc fixe 7 et la traverse externe 14 étant solidaire de la chambre de remplissage 4.

Le racloir 6 coulisse dans une rainure du bloc fixe 7, horizontale perpendiculaire aux crémaillères et est actionnée en direction de la chambre d'infusion, grâce à un ergot 19, par un levier 20 solidaire du pignon 8, le retour à la position de repos étant assuré par un ressort 25.

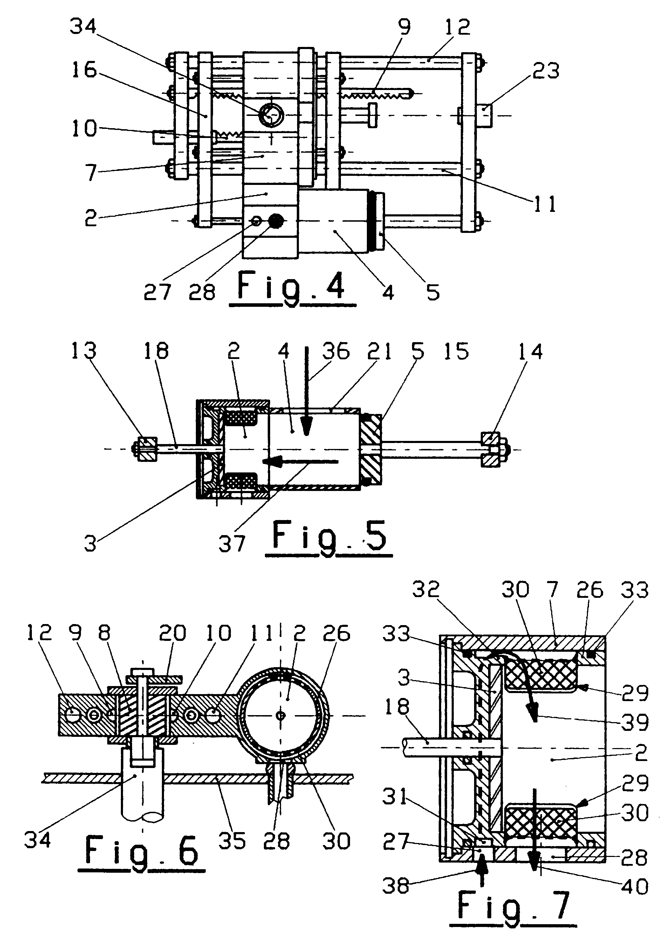

En position de repos (figure 1), la chambre de remplissage 4 est accolée à la chambre d'infusion 2, fermée de l'autre côté par le piston de compression 5. La poudre de café est déversée directement à l'intérieur par une ouverture 21 pratiquée sur le dessus de ladite chambre de remplissage suivant la flèche 36 (figure 5). Le moteur est mis en route et effectue environ un tour daris le sens indiqué par la flèche 22, actionnant le pignon 8, qui entraîne les traverses externes 13 et 14 par l'intermédiaire de la crémaillère principale 9, ce qui a pour effet de faire traverser le piston de compression 5 à l'intérieur de la chambre de remplissage, puis de le faire pénétrer dans la chambre d'infusion 2 où il va progressivement compresser la poudre (flèche 37). En fin de course, un aimant permanent 23 solidaire de la traverse 14 vient au contact d'une pastille de fer doux 24 portée par la traverse interne 17 solidaire de la chambre de remplissage (figure 2). Un capteur de couple électronique provoque l'arrêt du moteur lorsque la pression préréglée est atteinte, puis l'injection de l'eau chaude dans la chambre d'infusion 2, suivant les flèches 38 et 39 (figure 7).

Le moteur redémarre alors en sens inverse actionnant par le pignon 8 et la crémaillère principale 9 les deux traverses externes 13 et 14. Grâce à l'aimant 23, la traverse externe 14 entraîne la traverse interne 17, qui entraîne à son tour la traverse interne 16 ce qui déplace simultanément le fond mobile 3 et la chambre de remplissage 4 conjointement avec le piston de compression 5. Au moment où le fond mobile 3 arrive à fleur de l'ouverture de la chambre d'infusion 2 (figure 3) le levier 20 solidaire du pignon 8 entre en contact avec l'ergot 19 du racloir 6 poussant ce dernier entre les chambres d'infusion et de remplissage afin de dégager latéralement la galette formée par la poudre de café utilisée. Lorsque le racloir arrive en fin de course, le levier 20, continuant son mouvement libère l'ergot 19 et le racloir revient en arrière sous l'action du ressort 25. Simultanément, la crémaillère auxiliaire 10 vient buter sur la traverse interne 16, ce qui désaccouple l'aimant 23 et force le fond mobile 3 et la chambre de remplissage 4 à se mouvoir en sens inverse du piston 5 pour revenir à leur position de repos. L'ergot 19 d'entraînement du racloir 6 a un profil incliné lui permettant de ne pas être entraîné par le levier 20 lors de la phase de compression.

La chambre d'infusion 2 est constituée d'une pièce cylindrique 26 facilement démontable, maintenue par un circlip dans un alèsage du bloc fixe 7, dans la partie basse duquel débouchent l'arrivée d'eau chaude 27 et l'orifice 28 d'évacuation du café infusé, ladite pièce cylindrique étant pourvue, d'une part, de deux lumières périphériques 29 supérieure et inférieure, diamètralement opposées et portant chacune une grille 30 cintrée éventuellement amovible, et d'autre part, d'une rainure annulaire 31, située au droit de l'arrivée d'eau chaude et permettant à celle-ci d'arriver dans la chambre d'infusion au travers de la grille supérieure (flèche 39 figure 7) grâce à un méplat 32 les reliant et prévu à cet effet. Le café infusé passe par la grille inférieure et sort par l'orifice 28 suivant la flèche 40. L'étanchéité est assurée par deux joints toriques 33 situés aux deux extrémités de la pièce cylindrique 26.

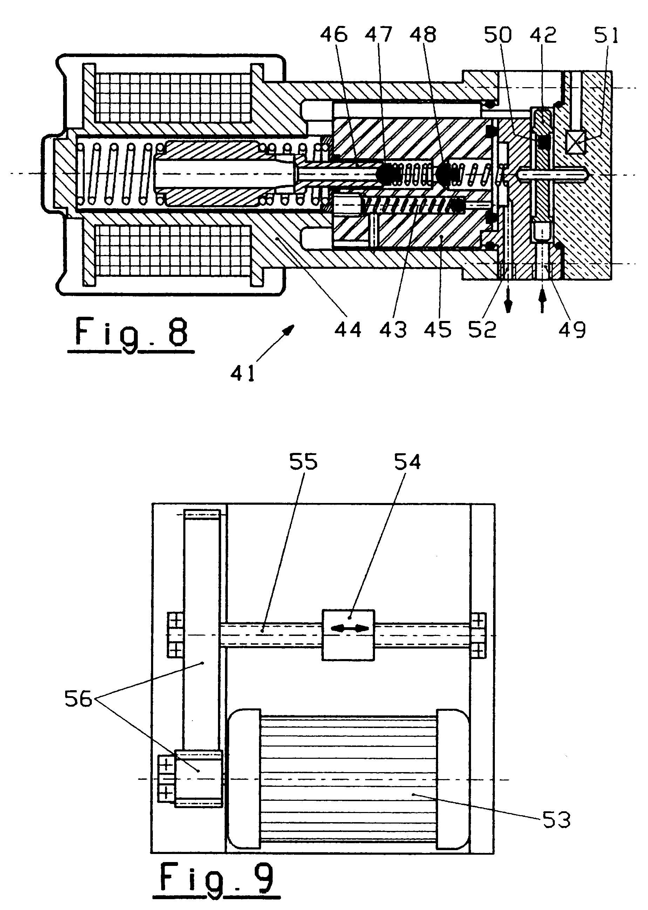

La moto-pompe 41 d'alimentation en eau (figure 8) est un ensemble monobloc comportant un débitmètre 42 et un limiteur de pression 43 intégrés. Elle est de préférence du type à piston libre creux à moteur électromagnétique, mais peut aussi bien être de type à piston commandé entraîné par un moteur rotatif. Dans le premier cas, elle est avantageusement constituée d'un corps principal 44, usiné en une seule pièce de matière plastique l'une de ses extrémités formant bobine du moteur électromagnétique, l'autre extrémité contenant le bloc cylindre 45 dans lequel se meut le piston 46, et comportant des clapets anti-retour 47 et 48. Le débitmètre 42, situé dans un bloc fermant le corps principal 44 du côté du bloc cylindre 45, directement après l'arrivée d'eau 49, est formé d'une roue folle à palettes et comporte un aimant permanent 50 dont le passage est détecté par un détecteur électromagnétique 51 ayant pour double fonction de permettre d'arrêter la moto-pompe une fois la quantité d'eau désirée obtenue, et de signaler un éventuel défaut d'arrivée d'eau.

Le limiteur de pression 43 est constitué d'un perçage ménagé dans le bloc cylindre 45 contenant un clapet à ressort taré mettant en communication la sortie d'eau 52 avec la base du piston 46, de manière à ce que l'eau soit recyclée, sans entraîner le débitmètre 42 en cas de contre-pression à ladite sortie d'eau. Le groupe mécanique 1 peut être actionné de deux manières différentes :
1° Le moteur d'entraînement peut actionner ce dernier par l'intermédiaire d'un raccord rapide 34 solidaire de son axe et s'accouplant au pignon 8 actionnant les crémaillères 9 et 10 (figure 6).
2° Le moteur 53 peut également actionner directement la crémaillère principale grâce à une pièce mobile 54 s'accouplant sur l'une des traverses externe 13, 14, et dont les mouvements sont provoqués par une vis 55 entraînée par le moteur 53 par l'intermédiaire d'un réducteur 56 (figure 9).

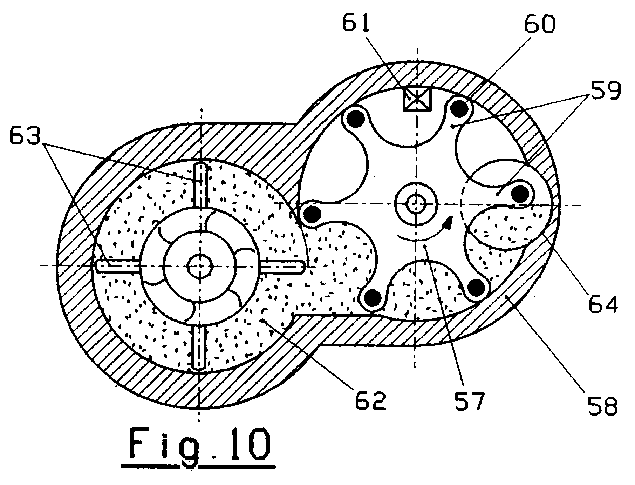

Le dosage de la poudre de café est effectué par une roue libre 57 montée à la base du moulin à café, tangente à la chambre de monture et située sur le même plan quelle. Cette roue tourne dans un élément cylindrique 58 fermé à axe vertical. Elle comporte une série d'aubes 59 comportant chacune un aimant permanent 60 passant sous un détecteur de passage 61. La poudre de café 62 est chassée par les ailettes 63 fixées à la base de l'axe du moulin et pénètre dans les cavités formées par les aubes 59 de la roue libre 57, entraînant celle-ci en rotation, pour finalement s'échapper par gravité à travers un trou 64 prévu à cet effet dans le fond de l'élément cylindrique 58 (figure 10).

Le groupe mécanique 1 est fixé sur une platine 35 du châssis de la machine grâce à une seule vis munie d'un écrou papillon permettant le démontage sans outillage. La chaudière de production d'eau chaude et le moteur sont situés juste au-dessous de cette platine ce qui permet de raccorder l'arrivée d'eau 27 et l'orifice d'évacuation 29 sans tubulure, grâce à de simples raccords rapides. Le café infusé passe par le corps de la chaudière, ce qui permet d'améliorer le rendement thermique global. Il est à noter que la platine 35 peut être supprimée, le groupe mécanique 1 étant fixé directement sur la chaudière.

Grâce à sa fiabilité, à sa facilité d'utilisation, à son volume réduit et à son faible coût de revient, le dispositif qui vient d'être décrit se prête particulièrement bien à la réalisation de machines à café automatiques destinées à un usage aussi bien domestique que professionnel, par exemple dans des cantines, des restaurants libre service, sur les lieux de travail ou dans des endroits publics.

Le positionnement des divers éléments constitutifs donnent à ce dispositif un maximum d'effets utiles qui n'avaient pas été obtenus à ce jour par des dispositifs similaires.

## Revendications

1. Dispositif pour la percolation automatique et instantanée de liquides alimentaires, et notamment de boissons chaudes telles que le café, du type comportant une chambre d'infusion (2) avec des moyens de remplissage et d'évacuation de produits aromatiques de percolation et notamment du café moulu, un piston de compression (5) apte à pénétrer dans ladite chambre, laquelle pouvant recevoir de l'eau chaude sous pression grâce à une moto-pompe (41) et comportant un lit de filtration pourvu d'orifices (28) pour le passage du liquide vers une évacuation, ainsi qu'un fond mobile (3), celui-ci et le piston de compression (5) ayant des axes de déplacement colinéaires entre eux et colinéraires avec l'axe de la chambre d'infusion (2), et étant actionnés grâce à une crémaillère principale (9) et une crémaillère secondaire (10) dans des directions opposées, ces dernières entraînant à leur tour le piston de compression (5) et le fond mobile (3) de manière à permettre successivement le remplissage de la chambre d'infusion (2), la compression des produits de percolation et leur évacuation, caractérisé par la combinaison d'un groupe mécanique (1) disposé horizontalement et amovible sans outillage comportant un piston de compression (5) à déplacement horizontal, une chambre d'infusion (2) dans laquelle le passage de l'eau chaude se fait par deux grilles cintrées (30) périphériques supérieure et inférieure, transversalement à l'axe horizontal du piston de compression (5) sans passer par ce dernier, ni par le fond mobile (3) de la chambre d'infusion, ladite chambre d'infusion étant prolongée par une chambre de remplissage (4) mobile horizontalement conjointement avec le fond mobile (3), et pourvue d'une ouverture (21) pratiquée sur le dessus permettant de recevoir le déversement direct de la poudre de café celle-ci étant évacuée par un racloir (6) à mouvement également horizontal mu par un levier rotatif (20) solidaire d'un pignon (8) engrenant sur les deux crémaillères (9, 10), une chaudière de production d'eau chaude étant située immédiatement au-dessous du groupe mécanique (1) et raccordée directement sans tubulures à la chambre d'infusion (2) par des raccords rapides d'injection d'eau et d'évacuation du café infusé, le café infusé repassant par le corps de ladite chaudière, l'ensemble des organes mobiles étant actionnés grâce à un accouplement rapide, par un moteur (53) dont l'arrêt et l'inversion de marche sont commandés directement par un capteur de couple électronique ajustable permettant de contrôler la pression exercée par le piston de compression (5).

2. Dispositif suivant la revendication 1, se caractérisant par le fait que le pignon (8) a un axe vertical et est monté sur un bloc fixe (7) sur lequel est également montée la chambre d'infusion (2) et comportant deux alésages dans lesquels deux tiges parallèles (11, 12) horizontales portant à leurs extrémités deux traverses externes (13, 14), l'une étant solidaire d'une extrémité de la crémaillère principale (9) l'autre portant l'axe (15) du piston de compression (5), deux traverses internes (16, 17), située entre chacune des traverses externes (13, 14) et le bloc fixe (7), rendues solidaires par deux tirants traversant le bloc fixe (7), coulissant sur les tiges parallèles (11, 12), et étant solidaires l'une d'une tige (18) portant le fond mobile (3), l'autre de la chambre de remplissage (4).

3. Dispositif suivant l'une quelconque des revendications précédentes, se caractérisant par le fait que le racloir (6) coulisse dans une rainure du bloc fixe (7) horizontale perpendiculaire aux crémaillères (9, 10) et est actionnée en direction de la chambre d'infusion, grâce à un ergot (19), par un levier (20) solidaire du pignon (8), le retour à la position de repos étant assuré par un ressort, l'ergot (19) ayant un profil incliné lui permettant de ne pas être entraîné par le levier (20) lors de la phase de compression.

4. Dispositif suivant l'une quelconque des revendications précédentes, se caractérisant par le fait que la chambre d'infusion (2) est constituée d'une pièce cylindrique (26) facilement démontable, maintenue par un circlip ou autre dans un alésage du bloc fixe (7), dans la partie basse duquel débouchent l'arrivée d'eau chaude (27) et un orifice (28) d'évacuation du café infusé, ladite pièce cylindrique étant pourvue, d'une part, de deux lumières périphériques (29) supérieure et inférieure, diamètralement opposées et portant chacune une grille (30) cintrée et d'autre part d'une rainure annulaire (31), située au droit de l'arrivée d'eau chaude (27), et permettant à celle-ci d'arriver dans la chambre d'infusion au travers de la grille supérieure, grâce à un méplat (32) prévu à cet effet, le café infusé passant par la grille inférieure et sortant par l'orifice (28), l'étanchéité étant assurée par deux joints toriques (33) situés aux deux extrémités de la pièce cylindrique (26).

5. Dispositif suivant la revendication 4, se caratcérisant par le fait que les grilles (30) cintrées sont amovibles.

6. Dispositif suivant l'une quelconque des revendications précédentes se caractérisant par le fait que à la fin de la phase de compression, un aimant permanent (23) solidaire de la traverse externe (14) vient au contact d'une pastille de fer doux (24) portée par la traverse interne (17) solidaire de la chambre de remplissage (4), et provoque ainsi l'ouverture de celle-ci jusqu'au moment où la crémaillère auxiliaire (10) vient buter sur la traverse interne (16), ce qui désaccouple l'aimant (13) et force le fond mobile (3) et la chambre de remplissage (4) à se mouvoir en sens inverse du piston de compression (5) pour revenir à leur position de repos.

7. Dispositif suivant l'une quelconque des revendications précédentes, se caractérisant par le fait que la moto-pompe (41) d'alimentation en eau est un ensemble monobloc comportant un débitmètre (42) et un limiteur de pression (43) intégrés, ledit débitmètre, situé directement après l'arrivée d'eau (49), étant formé d'une roue folle à palettes comportant un aimant permanent (50) dont le passage est détecté par un détécteur électromagnétique (51), le limiteur de pression (43) étant consitué d'un conduit contenant un clapet à ressort taré mettant en communication la sortie d'eau (52) avec la base du piston (46) de manière à ce que l'eau soit recyclée sans entraîner le débitmètre (42) en cas de contre-pression à ladite sortie d'eau.

8. Dispositif suivant l'une quelconque des revendications précédentes se caractérisant par le fait que la moto-pompe (41) est du type à piston libre creux à moteur électromagnétique, et est constituée d'un corps principal (44) usiné en une seule pièce en matière plastique, l'une de ses extrémités formant la bobine du moteur électromagnétique, l'autre extrémité contenant le bloc cylindre (45) dans lequel se meut le piston (46).

9. Dispositif suivant l'une quelconque des revendications précédentes, se caractérisant par le fait que le moteur (53) d'entraînement du groupe mécanique (1) actionne ce dernier par l'intermédiaire d'un raccord rapide (34) solidaire de son axe et s'accouplant au pignon (8) actionnant les crémaillères (9 et 10).

10. Dispositif suivant l'une quelconque des revendications 1 à 8 se caractérisant par le fait que le moteur (53) actionne directement la crémaillère principale (9) grâce à une pièce mobile (54) s'accouplant à l'une des traverses externes (13, 14) et dont les mouvements sont provoqués par une vis (55) entraînée par le moteur (53) par l'intermédiaire d'un réducteur (56).

11. Dispositif suivant l'une quelconque des revendications précédentes, se caractérisant par le fait que le dosage de la poudre de café est effectué par une roue libre (57) située à la base du moulin à café tournant dans un élément cylindrique (58) fermé à axe vertical, et comportant une série d'aubes (59) comportant chacune un aimant (60) passant sous un détecteur de passage (61) la poudre de café (62) chassée par les ailettes (63) fixées à la base de l'axe du moulin, pénètrant dans les cavités formées par les aubes (59) de ladite roue libre, entraînant celle-ci en rotation, pour finalement s'échapper par un trou (64) prévu à cet effet dans le fond de l'élément cylindrique (58).

## Claims

1. Device for automatic and instantaneous perculation of liquid foods and especially hot drinks such as coffee, comprising an infusion chamber (2) with the means for filling and evacuating aromatic perculation products and notably ground coffee, a compression piston (5) which can penetrate the said chamber, itself receiving pressurized hot water through the action of a motor pump (41) and comprising a filter bed with orifice (28) to allow the passage of liquid towards a discharge, together with a mobile bottom (3), this and the compression piston (5) having co-linear axes of movement between them and co-linear with the infusion chamber (2) and being operated in opposing directions by a main rack (9) and secondary rack (10), the latter driving in turn the compression piston (5) and the mobile bottom (3) so as to allow successively filling of the infusion chamber (2), compression of perculation products and their evacuation, characterized in that the combination of a mechanical assembly (1) arranged horizontally and removable without tools, comprising a horizontally moving compression piston (5), an infusion chamber (2) receiving hot water via two upper and lower peripheral arched grills (30), transversally to the horizontal axis of the compression piston (5) without passing via the latter, nor via the mobile bottom (3) of the infusion chamber, the said infusion chamber being extended by a filling chamber (4) which is horizontally mobile jointly with the mobile bottom (3), and provided with an opening (21) on the top allowing it to receive directly the coffee powder, this being evacuated by a scraper (6) also with horizontal movement driven by a rotating lever (20) which is attached to a pinion wheel (8) engaging with the two racks (9, 10), a hot water boiler being situated immediately below the mechanical assembly (1) and connected directly without piping to the infusion chamber (2) by fast connectors for injecting water and evacuating the infused coffee, the infused coffee passing through the body of the said boiler, all the mobile organs being actuated through a fast coupling, by a motor (53), the stopping and reverse operation of which are directly controlled by an electronically adjustable torque sensor so that the pressure on the compression piston can be controlled (5).

2. Device as per claim 1 characterized by the fact that the pinion (8) has a vertical axle and is fitted on a fixed block (7) on which is also fitted the infusion chamber (2) and bearing two drilled holes in which two parallel and horizontal rods (11, 12) carrying at their ends two external cross pieces (13, 14), the one being solidly fixed to the end of the main rack (9), the other carrying the rod (15) of the compression piston (5), two internal cross members (16, 17) situated between each of the external cross members (13, 14) and the static block (7), attached by two rods crossing the static block (7), sliding on the parallel rods (11, 12), and being solidly fixed to a rod (18) carrying the mobile bottom (3), the other the filling chamber (4).

3. Device as per any one of the aforesaid claims, characterized in that the scraper (6) sliding in a groove on the horizontal static block (7) perpendicular to the racks (9, 10) is actuated in the direction of the infusion chamber, by the effect of a lug (19), by a lever (20) attached to the pinion wheel (8), return to the rest position being ensured by a spring, the lug (19) being an inclined section so that it is not driven by the lever (20) when in the compression phase.

4. Device as per any one of the aforesaid claims characterized in that the infusion chamber (2) consists of a cylindrical part (26) which is easily dismantled, held by a circlip or other in a drilled hole on the static block (7), in the lower part of which opens the hot water inlet (27) and an orifice (28) for evacuating the infused coffee, the said cylindrical part being provided, on the one hand with two upper and lower peripheral lights (29), diametrically opposite, and each bearing an arched grill (30) and an annular groove (31), situated at the hot water inlet (27), and allowing this to flow into the infusion chamber through the upper grill, by the use of a flat (32) provided to this effect, the infused coffee passing through the lower grill and exiting through an orifice (28), the tightness of the whole being ensured by two o-rings (33) situated at the two ends of the cylindrical part (26).

5. Device as per claim 4 characterized in that the arched grill (30) can be removed.

6. Device as per any one of the aforesaid claims characterized in that at the end of the compression phase, a permanent magnet (23) attached to the external cross member (24) comes into contact with a mild steel pellet (24) carried by the internal cross member (17) attached to the filling chamber (4), and thereby causing this to open when the auxiliary rack (10) butts against the internal cross member (16), which causes the magnet (13) to uncouple and forces the mobile bottom (3) and the filling chamber (4) to move in the opposite direction to the compression piston (5) in order to return to their resting position.

7. Device as per any one of the aforesaid claims characterized in that the motor pump (41) supplying water is a single assembly with integral flowmeter (42) and pressure limiter (43), the said flowmeter situated directly behind the water inlet (49), being formed of a loose wheel with blades with a magnet (50) whose passage is detected by an electro-magnetic detector (51), the pressure limiter (43) consisting of a pipe with rated spring valve connecting up the water outlet (52) with the piston base (46) so that the water is recycled without driving the flowmeter (42) in case of counter-pressure at the said water outlet.

8. Device as per any one of the aforesaid claims characterized in that the motor pump (41) is a hollow free-floating piston type with electromagnetic motor, and consists of a main casing (44) machined as a single part in plastic, one of its ends forming the coil of the electromagnetic motor, the other end containing the cylinder block (45) in which the piston (46) moves.

9. Device as per any one of the aforesaid claims characterized in that the motor (43) driving the mechanical assembly (1) operates the latter through a fast connector (34) attached to its rod and coupling to the pinion (8) operating the racks (9 and 10).

10. Device as per any one of the claims 1 to 8 characterized in that the motor (53) directly actuates the main rack (9) through a mobile part (54) connecting to one of the end cross members (13, 14), whose movements are tripped by a screw (55) driven by the motor (53) through a gearing (56).

11. Device as per any one of the aforesaid claims characterized in that the dosing of the coffee powder takes place through the use of a free wheel (57) situated at the bottom of the coffee grinder turning in a cylindrical element (58) closed at the vertical axis and comprising a series of blades (59), each one with a magnet (60) passing under a detector (61), the coffee powder (62) forced out by the blades (63) fixed at the base of the grinder axis, penetrating into the cavities formed by the blades (59) of the said free wheel, driving this in rotation, in order to finally escape via a hole (64) provided to this effect in the bottom of the cylindrical element (58).

## Patentansprüche

1. Vorrichtung zum automatischen und sofortigen Perkolieren von Nahrungsflüssigkeiten, und insbesondere von warmen Getränken wie Kaffee, des Typs bestehend aus einer Infusionskammer (2) mit Mitteln zum Füllen und Evakuieren von aromatischen Perkolationsprodukten und hauptsächlich gemahlenem Kaffee, einem Verdichtungskolben (5), geeignet in die besagte Kammer einzudringen, die mit Hilfe einer Motorpumpe (41) druckbeaufschlagtes heißes Wasser aufnehmen kann und über ein Filtrationsbett verfügt, welches mit Öffnungen (28) versehen ist für den Durchgang der Flüssigkeit zu einem Abfluß sowie einer mobilen Rückwand (3), die mit dem Verdichtungskolben (5) unter sich und mit der Infusionskammer (2) kolineare Bewegungsachsen haben und mit Hilfe einer Hauptzahnstange (9) und einer Sekundärzahnstange (10) in entgegengesetzten Richtungen betätigt werden, diese letzteren ihrerseits den Verdichtungskolben (5) und die mobile Rückwand (3) bewegen, sodaß nacheinander das Füllen der Infusionskammer (2), die Verdichtung der Perkolationsprodukte und ihre Evakuierung ermöglicht werden, gekennzeichnet durch die Kombination einer horizontal angeordneten und ohne Werkzeug abnehmbaren mechanischen Einheit (1), welche einen Verdichtungskolben (5) mit horizontaler Bewegung, eine Infusionskammer (2), in welcher der Durchfluß des Heißwassers durch ein oberes und ein unteres gewölbtes peripherisches Gitter (30) quer zur horizontalen Achse des Verdichtungskolbens (5) erfolgt, ohne durch diesen letzteren weder durch die mobile Rückwand (3) der Infusionskammer hindurchzufließen, wobei die besagte Infusionskammer durch eine horizontal zusammen mit der mobilen Rückwand (3) bewegliche Füllkammer (4) verlängert wird und mit einer von oben ausgeführten Öffnung (21) versehen ist, welche erlaubt die direkte Einleitung des Kaffeepulvers aufzunehmen, das durch einen Abstreifer (6) mit ebenfalls horizontaler Bewegung durch einen rotierenden Hebel (20) bewegt wird, welcher mit einem Zahnrad (8) verbunden ist, das in die beiden Zahnstangen (9, 10) eingreift, einem Wasserkessel zur Erzeugung von Heißwasser, der sich unmittelbar unter der mechanischen Einheit (1) befindet und direkt ohne Leitungen durch Schnellverschlüsse an die Infusionskammer (2) angeschlossen ist zur Wasserzuführung und Evakuierung des aufgegossenen Kaffees, wobei der aufgegossene Kaffee den Körper des besagten Wasserkessels durchquert, die Gesamtheit der mobilen Organe mit Hilfe einer Schnellkupplung durch einen Motor (53) angetrieben wird, dessen Stillstand und Umkehr der Laufrichtung direkt durch einen regelbaren elektronischen Momentgeber gesteuert werden und somit eine Kontrolle des durch den Verdichtungskolben (5) ausgeübten Drucks ermöglicht.

2. Vorrichtung gemäß Anspruch 1, dadurch gekennzeichnet, daß das Zahnrad (8) eine senkrechte Achse hat und auf einen festen Block (7) montiert ist, auf dem ebenfalls die Infusionskammer (2) montiert ist und welcher über zwei Bohrungen verfügt in denen zwei parallele Stifte (11, 12) angeordnet sind, die an ihren Enden zwei äußere Querleisten (13, 14) tragen, von denen eine kraftschlüssig mit einem Ende der Hauptzahnstange (9) verbunden ist und die andere die Stange (15) des Verdichtungskolbens (5) trägt, zwei jeweils zwischen den äußeren Querleisten (13, 14) und dem festen Block (7) befindliche innere Querleisten (16, 17), die mit zwei durch den festen Block (7) hindurch gehende Spannstangen kraftschlüssig verbunden sind und auf den parallelen Stiften (11, 12) gleiten, wobei eine mit einer die mobile Rückwand (3) tragenden Stange (18), die andere mit der Füllkammer (4) verbunden sind.

3. Vorrichtung nach irgendeinem der vorhergehenden Ansprüche, dadurch gekennzeichnet, daß der Abstreifer (6) in einem Einschnitt des festen Blocks (7) horizontal senkrecht zu den Zahnstangen (9, 10) gleitet und in Richtung der Infusionskammer mittels einer Nocke (19) durch einen mit den Zahnrad (8) kraftschlüssig verbundenen Hebel (20) betätigt wird, wobei die Rückkehr in die Ruhestellung durch eine Feder gewährleistet ist und die Nocke (19) ein schräges Profil aufweist wodurch sie in der Verdichtungsphase nicht durch den Hebel (20) mitgeführt wird.

4. Vorrichtung nach irgendeinem der vorhergehenden Ansprüche, dadurch gekennzeichnet, daß die Infusionskammer (2) aus einem zylindrischen leicht auszubauenden Teil (26) besteht, gehalten durch einen Sicherungsbügel oder ein anderes Mittel in einer Bohrung des festen Blocks (7), in dessen Unterteil die Heißwasserzuführung (27) und eine Öffnung (28) für die Evakuierung des aufgegossenen Kaffees einmünden, wobei das besagte zylindrische Teil versehen ist einerseits mit jeweils einem oberen und unteren sich gegenüberliegenden Kanal (29), die beide ein gewölbtes Gitter (30) tragen, und andererseits mit einer ringförmigen Nut (31) an der Zuführung des Heißwassers (27), die diesem ermöglicht durch das obere Gitter in die Infusionskammer zu gelangen mittels einer zu diesem Zweck vorgesehenen Anflachung (32), der aufgegossene Kaffee durch das untere Gitter und die Öffnung (28) ausläuft, und die Dichtheit durch zwei an den beiden Enden des zylindrischen Teils (26) abgebrachten O-Ringe gewährleistet ist.

5. Vorrichtung gemäß Anspruch 4, dadurch gekennzeichnet, daß die gewölbten Gitter (30) abnehmbar sind.

6. Vorrichtung nach irgendeinem der vorhergehenden Ansprüche, dadurch gekennzeichnet, daß am Ende der Verdichtungsphase ein Dauermagnet (23), kraftschlüssig mit der äußeren Querleiste (14), in Kontakt mit einer Scheibe (24) aus weichem Eisen kommt, die auf der inneren Querleiste (17) kraftschlüssig mit der Füllkammer (4) angebracht ist, und somit die Öffnung dieser Kammer bewirkt bis zu dem Moment, in dem die Sekundärzahnstange (10) in Anschlag mit der inneren Querleiste (16) kommt was den Magnet (13) entkoppelt und die mobile Rückwand (3) und die Füllkammer (4) dazu bringt, sich in entgegengesetzter Richtung zum Verdichtungskolben (5) zu bewegen, um in ihre Ruhestellung zurückzukehren.

7. Vorrichtung nach irgendeinem der vorhergehenden Ansprüche, dadurch gekennzeichnet, daß die Motorpumpe (41) zur Wasserversorgung eine Blockkonstruktion ist, in welche ein Durchflußmesser (42) und ein Druckbegrenzer (43) integriert sind, wobei der besagte Durchflußmesser, direkt hinter dem Wassereinlauf (49) angebracht, durch ein Paletten-Losrad gebildet wird und einen Dauermagnet (50) enthält, dessen Durchlauf von einem elektromagnetischen Fühler (51) erfaßt wird, und der Druckbegrenzer (43) aus einer Leitung besteht mit einem kalibrierten Federventil, welche den Wasserausgang (52) mit der Basis des Kolbens (46) in Verbindung bringt, sodaß das Wasser rückgeführt wird ohne den Durchflußmesser (42) im Fall eines Gegendrucks auf den besagten Wasserausgang zu bewegen.

8. Vorrichtung nach irgendeinem der vorhergehenden Ansprüche, dadurch gekennzeichnet, daß die Motorpumpe (41) des Typs mit freiliegendem Hohlkolben und elektromagnetischem Motor ist und aus einem in einem Stück aus Kunststoff gearbeiteten Hauptkörper besteht, wobei eines der Enden die Spule des elektromagnetischen Motors bildet und das andere Ende den Zylinderblock (45) enthält, in dem sich der Kolben (46) bewegt.

9. Vorrichtung nach irgendeinem der vorhergehenden Ansprüche, dadurch gekennzeichnet, daß der Motor (53) zum Antrieb der mechanischen Einheit (1) diese mittels eines mit seiner Achse kraftschlüssigen Schnellverschlusses (34) betätigt, der sich mit dem Zahnrad (8) koppelt, welches die Zahnstangen (9 und 10) betätigt.

10. Vorrichtung nach irgendeinem der vorhergehenden Ansprüche, dadurch gekennzeichnet, daß der Motor (53) direkt die Hauptzahnstange (9) betätigt, mittels eines mobilen Teils (54), das an eine der äußeren Querleisten (13, 14) gekoppelt ist und dessen Bewegungen durch eine Schraube (55) verursacht werden, die durch den Motor (53) über ein Getriebe (56) angetrieben wird.

11. Vorrichtung nach irgendeinem der vorhergehenden Ansprüche, dadurch gekennzeichnet, daß die Dosierung des Kaffeepulvers durch einen Freilauf (57) erfolgt, der an der Basis der in einem zylindrischen, vertikal verschlossenen, Element (58) laufenden Kaffeemühle angebracht und mit einer Reihe von Radschaufeln (59) versehen ist, welche jeweils einen unter einem Durchlaufgeber (61) durchlaufenden Magnet (60) enthalten, wobei das Kaffeepulver (62), von den an der Basis der Mühlenwelle angebrachten Flügeln (63) getrieben, in die von den Radschaufeln (59) gebildeten Hohlräume des Freilaufs eindringt und in Drehrichtung bewegt wird, um schließlich durch eine zu diesem Zweck im Boden des zylindrischen Elements (58) vorgesehene Bohrung (64) zu entweichen.
